# EUROPEAN PATENT SPECIFICATION

(11) **EP 3 750 640 B1**
(45) Date of publication and mention of the grant of the patent: **06.12.2023**
(21) Application number: 20179839.4
(22) Date of filing: 12.06.2020
(51) Int. Cl.: B08B 1/04, B08B 5/02, B60S 3/04

(54) **DEVICE AND METHOD FOR CLEANING HUB AND MOUNTING FACE OF VEHICLE WHEELS FROM RESIDUES OF POWDER PAINT**
VORRICHTUNG UND VERFAHREN ZUR REINIGUNG VON NABE- UND MONTAGEFLÄCHE VON FAHRZEUGRÄDERN VON PULVERLACKRÜCKSTÄNDEN
DISPOSITIF ET PROCÉDÉ DE NETTOYAGE DU MOYEU ET DE LA FACE DE MONTAGE DES ROUES D'UN VÉHICULE POUR ENLEVER DES RÉSIDUS DE PEINTURE EN POUDRE

(30) Priority: 14.06.2019 IT 201900009051
(43) Date of publication of application: 16.12.2020
(73) Proprietor: Olpidürr S.P.A., 20090 Segrate (MI) (IT)
(72) Inventor: PEDRUZZI, Patric, 24043 CARAVAGGIO (BG) (IT); PIZZAMIGLIO, Marco Pierluigi, 20090 SEGRATE (MI) (IT)
(74) Representative: Studio Torta S.p.A.

(56) References cited:
- WO-A1-2006/066652
- DE-U1-202007 014 659
- JP-A- 2000 033 331
- JP-A- 2001 199 312
- US-A1- 2016 136 697

## Description

### Technical Field of the Invention

The invention relates to a device and a method for cleaning vehicle wheels, in particular a hub and an adjacent mounting face of wheel rims, for example made of a light alloy, after the wheel rims have been subjected to a powder coating operation, in order to remove residues of powder paint from selected areas of the wheel rims, in particular from a front face (mounting face) of a hub of the wheels, which is designed to be coupled, in use, to a vehicle wheel hub unit, and from a radially inner lateral surface of the hub.

### Prior Art

Wheel rims normally consist of an outer ring, which is U-shaped in radial section and on which, in use, the tyres are mounted, of an intermediate part, which usually consists of a plurality of radial spokes, and of a central annular element or hub, which is delimited by an annular front mounting surface or face, which, in use, comes into contact with the wheel hub unit of the vehicle and needs to remain as raw as possible in order to allow for a good friction coupling to the wheel hub unit.

Both for aesthetic and technological reasons, vehicle wheel rims and, in particular, wheel rims made of light alloys, need to be painted and the painting process most commonly used is powder coating, during which an electrostatically charged powder paint is sprayed against the wheel rim and then cured.

This type of painting process is carried out supporting each wheel rim by means of a respective spindle, which consists of a stem provided, at an upper end thereof, with a conical head projecting from a plate or flange and, at a lower end thereof, with a holding device, which is configured to engage a conveyor, usually a belt or chain conveyor.

Each wheel rim is laid on the plate or flange by means of the front annular surface of the central annular element, which engages, with a radially inner lateral wall thereof, the conical head, so that the outer ring or "rim" is supported in a radially projecting manner by the spindle, together with the spokes.

Once each spindle is coupled to a conveyor, the wheel rims are caused to go through a painting cabin, where they are painted, in order to then be cured.

During the powder coating operation, though, the area of the wheel hub also receives part of the paint, which, despite not perfectly adhering thereto, dirties it and, if it were cured with the rest of the paint correctly deposited on the areas actually subjected to the powder coating, would cause problems during the coupling to the wheel hub unit.

Therefore, wheel rims, after a powder paint spray deposition phase and before a powder paint curing phase, must be subjected to a cleaning phase, which is aimed at removing dirt/residues of powder paint from the area of the wheel rim hub and, in particular, from a front mounting surface or face of the hub, which, in use, is designed to be coupled to a wheel hub unit, and from a radially inner lateral surface or wall of the wheel rim hub.

Removing said powder paint is not a simple task; as a matter of fact, the paints used for wheel rim painting are highly inflammable/explosive, so that it is impossible to use metal brushes or any other tool that can produce sparks in contact with the rims. The use of soft brushes, for example made of felt or rubber, does not solve the problem of cleaning the rims in a quick, efficient and economic fashion; as a matter of fact, the brushes get dirty very quickly and, hence, need to be manually cleaned. The use of compressed air jets is deemed to be dangerous as well, both because it leads to the risk of removing powder paint from areas that are adjacent to the hub, but need to remain painted, and because even the smallest quantity of paint should carefully be prevented from being released into the atmosphere, both for obvious pollution reasons and, especially, for the risk of formation of explosive mixtures.

### Summary of the Invention

The object of the invention is to provide a device and a method for cleaning selected areas of wheel rims from residues of powder paint, which are not affected by the drawbacks of the prior art and, in particular, allow for quick treatments, have small usage costs and small dimensions and ensure a high safety in use, in particular when it comes to the risk of explosions, as well as a high cleaning efficiency.

Therefore, according to the invention there are provided a device in accordance with claim 1, and a method in accordance with claim 8, for cleaning a hub and a mounting face of vehicle wheels from residues of powder paint.

The document US 2016/136697 discloses a cleaning device suitable for cleaning selected areas of vehicle wheels in accordance with the preamble of claim 1, and a method of cleaning. It The document JP2000033331 discloses a cleaning device and a cleaning method for cleaning selected areas of vehicle wheels. The document DE202007014659U discloses a device comprising means for cleaning brushes.

### Brief Description of the Drawings

Further features and advantages of the invention will be best understood upon perusal of the following description of a non-limiting embodiment thereof, given by mere way of example, with reference to the accompanying drawings, wherein:
- figure 1 schematically shows a three-quarter perspective front view of a cleaning device for vehicle wheels, in particular for wheel rims, according to the invention and provided with three cleaning stations occupied by three wheel rims with different dimensions;
- figure 2 schematically shows the same perspective view of the cleaning device of the invention as in figure 1, with parts left out for a better understanding of the structure of the cleaning stations;
- figure 3 schematically shows a three-quarter perspective rear view of the stations of the cleaning device of figures 1 and 2 with two of the three wheel rims left out in order to better show respective details of the cleaning stations;
- figure 4 schematically shows a perspective view, shown in a cross section taken along plane IV-IV, of the cleaning device of the invention in the configuration of figure 3;
- figure 5 schematically shows, on a larger scale, a perspective view, shown in a cross section taken along plane V-V, of one of the cleaning stations of the device of the invention; and
- figure 6 schematically shows a side elevation view, shown in a cross section taken along a plane that is parallel to plane V-V, of the cleaning station of figure 5.

### Detailed Description

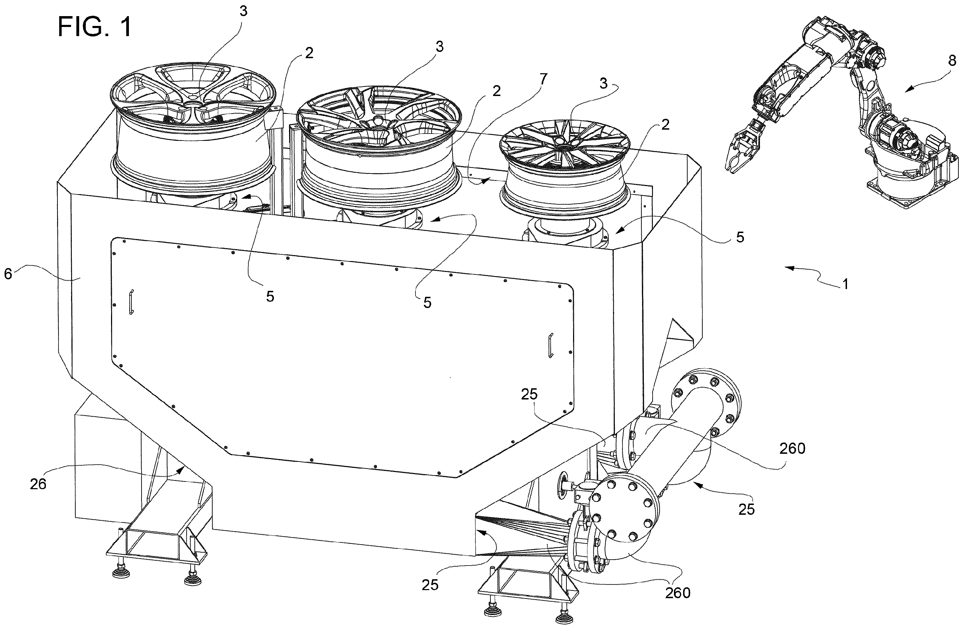

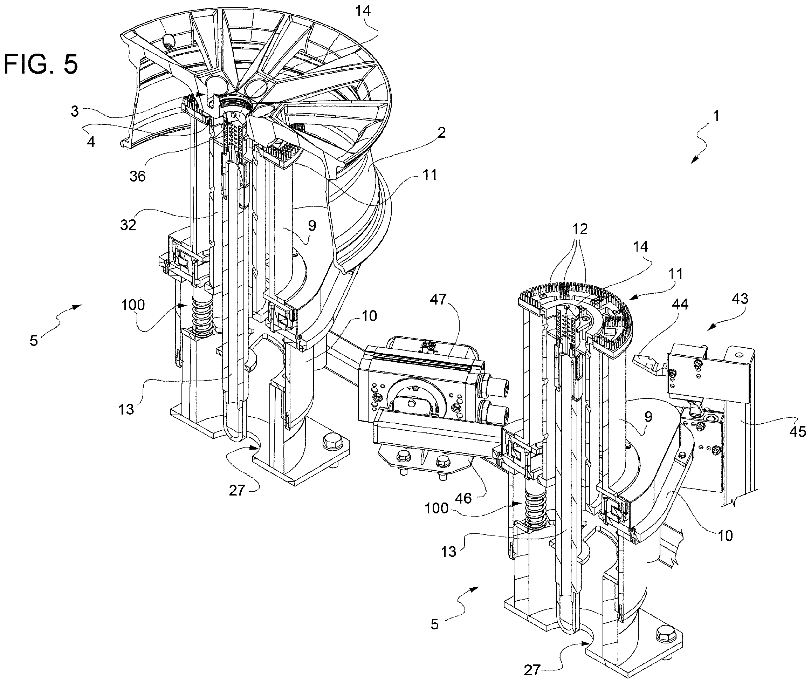

With reference to figures 1 to 6, number 1 indicates, as a whole, a cleaning device (which is shown in a merely schematic manner) to clean selected areas of vehicle wheels and, in particular, a hub 3 and an annular mounting face 4 of wheel rims 2 (figure 5) from residues of powder paint, after the wheel rims 2 have been subjected to a known electrostatic powder coating phase and before the powder paint is cured, according to a known painting process.

The cleaning device 1 comprises at least one cleaning station 5, on which, in use, a wheel or wheel rim 2 is caused to stand, and a cup- or tank-shaped casing 6, which houses, on the inside, at least one cleaning station 5 or, as is the case in the non-limiting example shown herein, a plurality of (in the example discussed herein, three) cleaning stations 5, which can be operated simultaneously and are each designed to receive one wheel rim 2 at a time, even with different diameters and shapes, for example properly spaced apart from one another so as to receive wheel rims with wheel dimensions ranging from 14 inches to 26 inches wherein 1 inch corresponds with 2,54 cm.

In order to allow the wheel rims 2 to be positioned on the cleaning stations 5 located in the casing or tank 6, the cleaning stations 5 are accessible through an upper inlet mouth 7 of the casing or tank 6, in the example shown herein having a rectangular shape.

In order to cause the wheel rims 2 to stand and, at the same time, be supported on the cleaning stations 5 and in order to move the wheel rims 2 from and to the cleaning device 1, the latter comprises a plurality of robots 8, only one of them being shown herein, in a merely schematic manner, for the sake of simplicity. The robots 8 have at least three numerical control axes and can be of any known type.

The casing or tank 6 is preferably made of a metal material, because it is conductive.

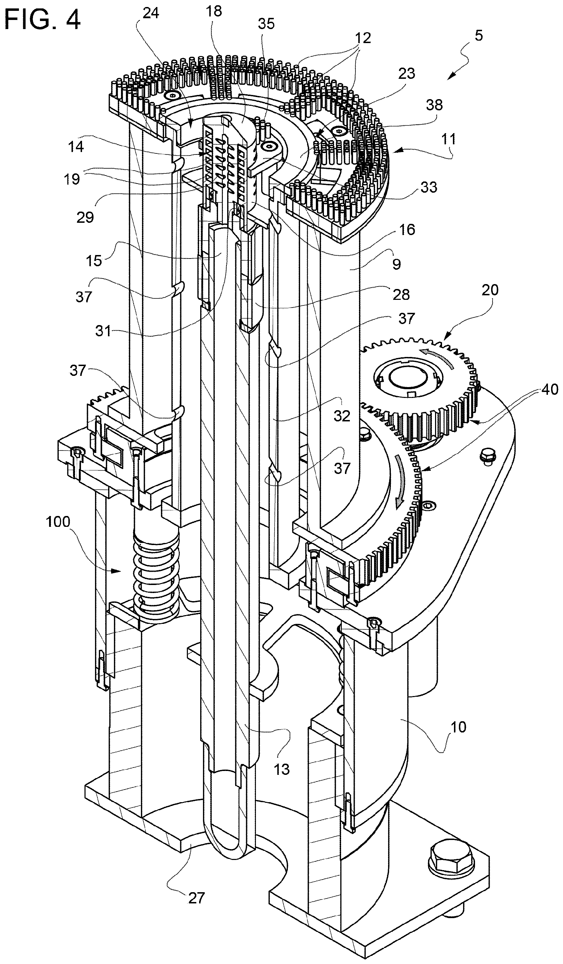

Each cleaning station 5 (figures 4-6) comprises (only one of the cleaning stations 5 is described in detail below, the three cleaning stations 5 of the cleaning device 1 being identical, the only difference lying, at most, in the dimensions of the single components) a first hollow shaft 9, which is defined by a first cylindrical pipe section, a fixed support 10 for the shaft 9, the shaft 9 being mounted on the fixed support 10 in an idle manner, a first annular brush 11, which is provided with bristles 12 made preferably of a fireproof synthetic plastic material and which is attached to the shaft 9 in an angularly integral manner.

Each cleaning station 5 further comprises a cylindrical compressed air feeding pipe 13, which is mounted in a fixed manner relative to the support 10 and is housed in a coaxial fashion within the first shaft 9; the pipe 13 is supplied in a known manner by a compressed air production system on the outside of the casing or tank 6, which is known and is not described for the sake of simplicity.

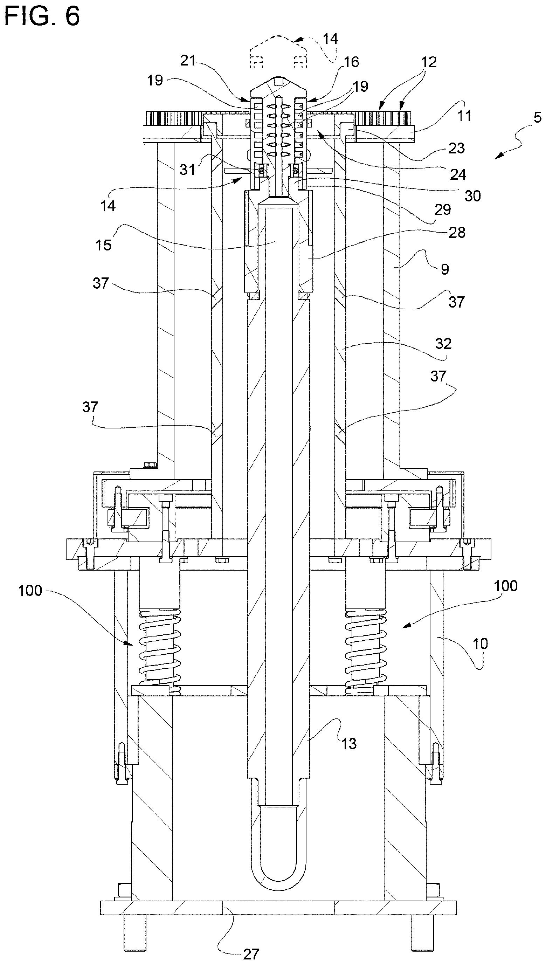

According to the invention, each cleaning station 5 further comprises a cup-shaped nozzle 14, which is carried by an upper end 15 (figures 4 and 6) of the compressed air feeding pipe 13 in an idle manner. Furthermore, the nozzle 14 can also be telescopically movable in an axial direction onto the air feeding pipe 13 or be axially fixed.

The nozzle 14 comprises (figures 4 and 6) a lateral cylindrical wall 16, which is coaxial to the compressed air feeding pipe 13, and a bottom wall 18, which is opposite the compressed air feeding pipe 13 and has the shape of an ogive (nose cone). Furthermore, the nozzle 14 is provided, through the lateral cylindrical wall 16, with a plurality of annular rows of first through holes 19 arranged on top of one another in an axial direction,.

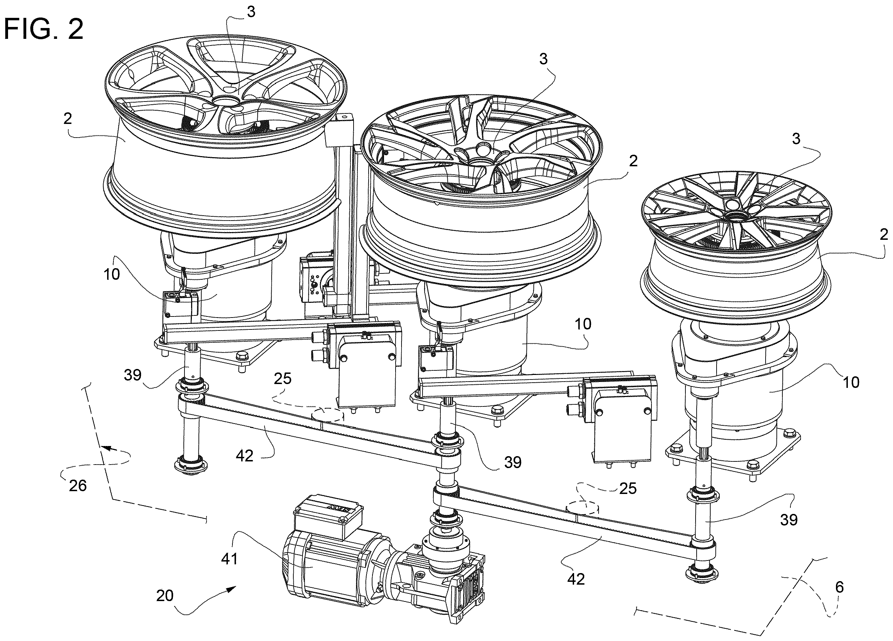

Each station 5 or, more in general, the cleaning device 1 as a whole further comprises a rotation device 20 (figures 2 and 4) for the first shaft 9, as described more in detail below.

According to the invention, the nozzle 14 and the shaft 9 are relatively movable in an axial manner between a first position (figure 6), in which the nozzle 14 is retracted inside the first brush 11 so that only a first row 21 (figure 6) of first holes 19, which is immediately adjacent to the bottom wall 18, is arranged immediately above the bristles 12 of the first brush 11, and a second position (shown with a broken line and only schematically), in which the nozzle 14 is extracted from the first brush 11 to an extent that is such as to allow it to be inserted, in use, inside the wheel hub 3 of each wheel rim 2, while the first brush 11 cooperates with the mounting face 4 of the hub 3 and at least one row (in the example shown herein, the one that is the farthest from the bottom wall 14) of first holes 19 is aligned substantially flush with the bristles 12 of the first brush 11.

These two configurations, i.e. the extracted and retracted configurations of the nozzle 14, can be obtained both by configuring the upper end 15 of the feeding pipe 13 and the nozzle 14 so that the nozzle 14 is axially movable onto the pipe 13 and, as shown in a non-limiting and merely schematic manner in figures 4 and 6, by configuring the shaft 9 in such a way that it is directly or indirectly supported by a bench of spring supports 100, so that, by pushing the brush 11 downwards with the respective shaft 9, the nozzle 14 progressively moves from the retracted position to the extracted position.

In use, the wheel rims 2 are supported by the robot/s 8; while the nozzle 14 is axially fixed, the robot 9 presses the wheel rim 2 against the brush 11 pushing the shaft 9 downward against the elastic reaction of the supports 100, thus causing the nozzle 14 to be inserted into the wheel hub at the desired height; at the end of this cleaning phase, the spring supports 100 cause the shaft 9 to go back to the rest position, once the wheel has been released.

Finally, according to the invention, the inside of the first shaft 9 is connected, through the support 10, to an air suction device 22 (figure 1) and, in turn, the inside of the first shaft 9 is connected, through second holes or windows 23, to an annular gap 24 placed between the first brush 11 and the nozzle 14; the holes or windows 23 are radially arranged towards the inside of the first brush 11 (figures 4 and 6), between respective radial spokes thereof.

The air suction device 22 is supported by the casing or tank 6, on the outside of the latter, and comprises two suction mouths 25 (figures 1 and 2), which are arranged through the casing 6 in the area of a hopper-shaped bottom wall 26 thereof and are connected to a respective suction piping 260 of the device 22.

The supports 11, which also have, as a whole, a cylindrical shape and are hollow, have lower openings 27 facing the bottom wall 26 of the casing 6, so that the suction device 22 is suited to suck air also from the inside of the hollow shaft 9 and up to the area of the gap 24 and of the brushes 11.

The hopper-shaped bottom wall 26 has an inclination relative to the horizontal which is equal to or greater than 30°, so as to make it easier for the (few) residues of powder paint which are removed from the rims 2, by means of the brushes 11 and the nozzles 14, but are not completely sucked away by the device, 22, to detach themselves and slide downwards. Said (few) residues gather themselves at the bottom of the casing or tank 6, where they can manually be removed every now and then or, anyway, later, or they are continuously or occasionally removed by means of a known mechanical device, which is not shown for the sake of simplicity.

According to a preferred embodiment of the invention, the first holes 19 are all oriented in a same direction inclined relative to a radial direction perpendicular to the lateral cylindrical wall 16 of the nozzle 14, so that compressed air fed to the nozzle 14 by the feeding pipe 13 also causes the nozzle 14 to rotate relative to the feeding pipe 13 due to reaction propulsion. Obviously, as an alternative, the nozzle 14 could be caused to rotate with a known mechanical device.

The nozzle 14 is made of a preferably fireproof, synthetic plastic material and comprises a first annular element 28 (figures 4 and 6), which is fitted (in a substantially fluid-tight manner) in a coaxial fashion on the upper end 15 of the compressed air feeding pipe 13, and a second annular element 29, which is delimited by the lateral cylindrical wall 16, and which element 29 is fitted in an idle manner on a cylindrical portion 30 (figure 6) of the first annular element 28 having a smaller diameter, preferably with the interposition of a rolling bearing 31 (figures 4 and 6), more preferably made of glass, so as to avoid any possible spark.

The first annular element 28 of the nozzle 14 can be configured to receive an upward thrust from the compressed air fed to the nozzle 14 through the feeding pipe 13, at least starting from a predetermined compressed air flow rate, so as to progressively move, in use, the nozzle 14 towards the aforesaid second position, in which it is extracted from the first brush 11. Alternatively, the nozzle 14 can be moved to the extracted position by means of any known mechanical means, which is not shown herein, or it can be axially fixed, as already mentioned above, and it is the brush 11 that is lowered in order to progressively extract it from the latter.

According to the invention, each station 5 of the device 1 also comprises a hollow shaft 32 (figures 4 and 6), which is defined by a second cylindrical pipe section and is arranged in a coaxial manner inside the first shaft 9, between the latter and the compressed air feeding pipe 13, radially spaced apart both from the pipe 13 and from the shaft 9, so as to create respective annular gaps between the shaft 32 and the pipe 13 and between the shafts 32 and 9.

The second shaft 32 supports a second annular brush 33 (figure 4), which is provided with bristles 35 made of a preferably fireproof synthetic plastic material and is concentric to the first brush 11, radially on the inside thereof and radially on the outside of the nozzle 14.

The second shaft 32 is constrained in an angularly integral manner (and also in an axially integral manner) to the first shaft 9 and the brush 33 is substantially flush with the first brush 11 and is configured to brush, in use, at least part of an inner lateral surface 36 of the wheel hub 3 (figure 5).

The nozzle 14 is configured to be inserted, in use, radially on the inside of the second brush 33 and inside the wheel hub 3 so as to send compressed air through the first holes 19 towards the inner lateral surface 36 of the wheel hub 3 and through the respective bristles 35 and 12 of the brushes 33 and 11, radially from the inside towards the outside, while both the nozzle 14 and the brushes 11 and 33 rotate.

The aforesaid second holes 23 directly connect the annular gap 24 to the inside of the first shaft 9, while the annular gap 24 is directly connected to the inside of the second shaft 32; third holes 37 are obtained in such a way that they radially pass through the second shaft 32 so as to connect the inside of the second shaft 32 to the inside of the first shaft 9. To this aim, the holes 37 preferably are inclined downwards, namely on the opposite side relative to the brushes 11 and 33.

The annular gap 24 is delimited between the first brush 11 and the second brush 33 and is partly covered by a guard ring 38 (figure 4), which is configured to strike, in use, against part of the annular mounting face 4 so as to avoid possible outward radial movements of powder paint removed from the inside of the hub 3.

The rotation device 20 for the first shaft 9 of each cleaning station 5 comprises, for each station 5, an axle 39 (figure 2), which is arranged radially on the outside of the support 11 and is parallel to the first shaft 9, to which it is coupled by means of a gear transmission 40.

In the non-limiting example shown herein, the cleaning device 1 comprises a plurality of cleaning stations 5 arranged next to one another in series and configured to operate simultaneously, each caused to rotate by a respective axle 39; the axles 39 are operated, a first one, directly by a motor 41 and, the other ones, by the first axle 39 by means of belt transmissions 42.

The axles 39 and, if necessary, also the motor 40 are housed, together with - and on the outside of - the support 11 of each cleaning station 5, inside the casing 6, whose mouth 7 faces towards the brushes 11 (and 33) of the cleaning stations 5.

The mouth 7 can be provided with an air curtain seal system (which is not shown herein for the sake of simplicity) and the inside of the casing or tank 6 is anyway kept under vacuum by the suction device 22, so as to prevent possible residues of powder paint removed from the wheel rims 2 from being released to the outside.

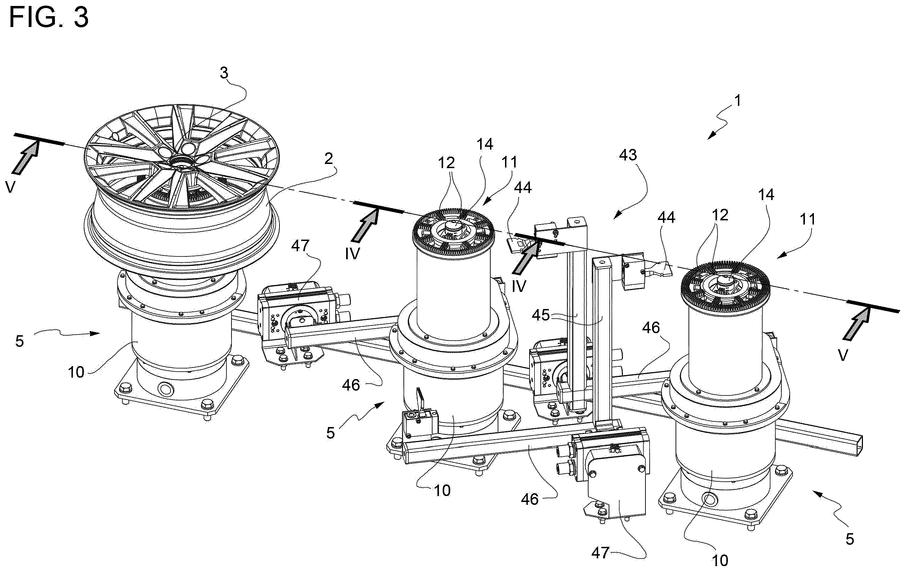

In order to obtain, in use, a cleaning of the brushes 11 and 33, if present, which is better than the one already ensured by the air jets produced by the nozzle 14, the cleaning device 1 is also provided with an additional cleaning device, indicated, as a whole, with number 43 (figures 3 and 5), which is specifically destined to the brushes 11 (and 33) and is installed inside the casing or tank 6.

This system 43 is based on a series of nozzles 44, preferably shaped like a blade, namely at least one for each station 5, which are mounted on rods 45, which, in turn, can radially slide on tracks 46 relative to the station 5 and are operated by means of pneumatic valves 47. The nozzles 44 and the system 43, as a whole, are configured to be moved against the brushes 11 radially from the outside towards the inside and to introduce compressed air jets from the outside towards the inside through the bristles 12 and 35 of the brushes 11 and 33, while the suction device 22 is in action.

From what described above, it is clear that the invention is also defined, in accordance with claim 8, by a cleaning method for cleaning selected areas of vehicle wheels, such as a hub 3 and an annular mounting face 4 of wheel rims 2, from residues of powder paint left after powder coating of the wheel rims 2.

The method comprises the steps of:
- causing each wheel rim 2 to stand, for a first predefined amount of time, in the area of a cleaning station 5, which is enclosed within a cup- or tank-shaped casing 6, which is provided at the top with an inlet mouth 7 to allow the wheel rims 2 to be positioned on the cleaning station 5;
- during the standing step in the cleaning station 5, engaging the annular mounting face 4 and at least part of an inner lateral surface 36 of the wheel hub 3 with a pair of rotating annular brushes 11 and 33 having bristles 12, 35 made of a preferably fireproof synthetic plastic material, and - simultaneously - radially sending, from the inside towards the outside, compressed air against the bristles 12, 35 and against the entire inner lateral surface 36 of the hub 3 by means of a first nozzle 14, which is made of a synthetic plastic material, is provided with radial holes 19 and is progressively axially inserted in the hub 3 and simultaneously caused to rotate on itself;

- removing the wheel rim 2 from the cleaning station and continuing to cause the brushes 11 and 33 to rotate as well as feeding compressed air to the first nozzle 14, which is caused to rotate on itself, for a second predefined amount of time in order to clean the brushes;
- simultaneously with the standing step - with the wheel rim 2 standing on the cleaning station 5 - and with the cleaning step carried out to clean the brushes 11, 33, sucking from the casing 6 and from the inside of the cleaning station 5 a volume of air that is greater than the one of the compressed air fed to the nozzle 14 so as to maintain the inside of the casing 6 under vacuum in order to prevent residues of powder paint from being released through the mouth 7 of the casing 6, which, if necessary, can also be protected by an air curtain seal, feeding compressed air flush to the mouth 7, in particular after the removal of the wheel rims 2.

The brushes 11, 33 are caused to rotate at a speed of at least 60 rpm and the first and the second predefined amounts of time are equal to or smaller than 1.5 seconds.

During the cleaning step carried out to clean the brushes 11, 33, the bristles 12, 35 thereof are also intercepted by respective second nozzles 44, which radially feed air under pressure from the outside to the inside, after having stopped the supply of compressed air to the first nozzle 14 and for a third predefined amount of time, which is equal to or smaller than 2 seconds.

In order to further improve safety, on the edge of the mouth 7 of the tank 6, on the outside thereof, there can be UV sensors for a spark control.

The wheel rims 2 are caused to stand on the cleaning station 5 and are moved by means of a plurality of robots 8 having at least three numerical control axes, all arranged on the outside of the tank 6.

Thanks to these solutions, the wheel rims 2 can be perfectly cleaned from powder paint on all the necessary parts, without any risk of removing paint from wheel rim parts that actually have to be painted. At the same time, there is no risk of powder paint being released into the atmosphere, thus reducing pollution and explosion risks to zero.

Hence, all the objects of the invention are reached.

## Claims

1. A cleaning device (1) for cleaning selected areas of vehicle wheels such as a hub (3) and an annular mounting face (4) of wheel rims (2) from residues of powder paint, the cleaning device comprising at least one cleaning station (5) on which a wheel or a wheel rim can be made to station in use; wherein the cleaning station (5) comprises, in combination:
i)- a first hollow shaft (9) defined by a first cylindrical pipe section;
ii)- a fixed support (10) for the first shaft, the first shaft being mounted idle on said fixed support;
iii)- a first annular brush (11) provided with bristles (12) made of a synthetic and preferably fireproof plastic material, angularly fixed integral with the first shaft;
iv)- an air feeding cylindrical pipe (13) for feeding compressed air, mounted fixed relative to the support and housed coaxial within the first shaft;
v)- a cup-shaped nozzle (14), carried idle by an upper end (15) of the compressed air feeding pipe, the nozzle (14) comprising a cylindrical lateral wall (16) coaxial with the compressed air feeding pipe and a bottom wall (18), opposite to the compressed air feeding pipe, and being provided through the cylindrical lateral wall thereof with a plurality of annular rows (21) of first through holes (19), the annular rows being superimposed to one another in an axial direction; and
vi)- a rotation device (20) for the first shaft;
vii)- said nozzle (14) and/or said first shaft (9) being configured so as to be relatively axially movable between a first position, wherein the nozzle is retracted inside the first brush (11) so that only a first row (21) of first holes (19), immediately adjacent to the bottom wall, is arranged immediately above the bristles (12) of the first brush, and a second position, wherein the nozzle (14) is extracted from the first brush to an extent such as to be inserted in use inside the wheel hub (3) while the first brush (11) cooperates with the mounting face (4) of the hub and at least one row of the first holes (19) is aligned substantially flush with the bristles (12) of the first brush; **characterized in that**
viii)- the inside of the first shaft (9) is connected through the support (10) to an air suction device (22), second holes (23) being arranged radially towards the inside of the first brush to connect an annular gap (24) between the first brush and the nozzle with the inside of the first shaft;
ix)- the cleaning station (5) comprising a second hollow shaft (32) defined by a second cylindrical pipe section and arranged coaxial inside the first shaft (9), between the latter and the compressed air feeding pipe (13), radially spaced from both; the second shaft supporting a second annular brush (33) provided with bristles (35) made of a synthetic and preferably fireproof material and arranged concentric to the first brush (11), radially inside the latter and outside the nozzle (14); the second shaft being axially and angularly constrained integral with the first shaft and the second brush (33) being arranged substantially flush with the first brush and being configured to brush in use at least part of an inner lateral surface (36) of the wheel hub (3); said nozzle (14) being configured to be inserted in use radially on the inside of the second brush (33) and inside the wheel hub (3) to send compressed air through said first holes (19) towards the inner lateral surface (36) of the wheel hub and through respective bristles (11,35) of said first and second brushes.

2. The cleaning device according to claim 1, **characterized in that** said first holes (19) are all oriented in a same inclined direction relative to a radial direction perpendicular to the cylindrical lateral wall (16) of the nozzle, so that compressed air fed to the nozzle by said feeding pipe (13) causes the nozzle to rotate relative to the feeding pipe.

3. The cleaning device according to claim 1 or 2, **characterized in that** the nozzle (14) is made of a synthetic and preferably fireproof plastic material and comprises a first annular element (28) fitted movable and coaxial on said upper end of the compressed air feeding pipe (13) and a second annular element (29) delimited by said cylindrical lateral wall (16), which is fitted idle on a smaller diameter cylindrical portion (30) of the first annular element, preferably with the interposition of a rolling bearing (31), preferably made of glass.

4. The cleaning device according to claim 3, **characterized in that** the first annular element (28) of the nozzle (14) is configured to receive an upward thrust by the compressed air fed to the nozzle through the feeding pipe (13), so as to progressively bring the nozzle to said second position, wherein it is extracted from the first brush (11).

5. The cleaning device according to anyone of the preceding claims, **characterized in that** second holes (23) directly connect said annular gap (24) to the inside of the first shaft (9) while the annular gap (24) is directly connected to the inside of the second shaft (32), third holes (37) obtained radially passing through the second shaft connecting the inside of the second shaft to the inside of the first shaft.

6. The cleaning device according to claim 5, **characterized in that** said annular gap (24) is delimited between the first and the second brushes and is partly covered by a guard ring (38) configured to abut in use against part of the annular mounting face to prevent any outward radial movements of powder paint removed from the inside of the hub.

7. The cleaning device according to one of the preceding claims, **characterised in that** said rotation device (20) for the first shaft comprises an axle (39) arranged radially on the outside of the support (10) and parallel to the first shaft (9), with which it is coupled by means of a gear transmission (40); the cleaning device (1) comprising a plurality of cleaning stations (5) arranged side-by-side in series and configured to operate simultaneously, each one rotated by one said axle (39); the axles being driven, the first one directly by a motor (41) and the others by the first axle, by means of belt transmissions (42); the axles and the motor being housed, together with, and on the outside of, the support (10) of each cleaning station inside a cup-shaped casing (6), the casing having a mouth (7) facing towards the brushes (11) of the cleaning stations; a bottom wall (26) of the casing being hopper-shaped and being connected to respective suction pipings (260) of the air suction device (22), which is supported by the casing (6), externally to the same.

8. A cleaning method for cleaning selected areas of vehicle wheels such as a hub (3) and an annular mounting face (4) of wheel rims (2) from residues of powder paint left after powder painting of the wheel rims, the method comprising the steps of:
- making each wheel rim (2) stationary for a first predefined time at a cleaning station (5) enclosed within a cup-shaped casing (6), which is provided at the top with a mouth (7) to allow positioning of the wheel rims on the cleaning station;
- during the stationary phase on the cleaning station, engaging the annular mounting face (4) and at least part of an inner lateral surface (36) of the wheel hub with a pair of rotating annular brushes (11,33) having bristles (12,35) made of a synthetic preferably fireproof plastic material and simultaneously sending radially from the inside towards the outside compressed air against the bristles and against the entire inner lateral surface of the hub by means of a first nozzle (14) and provided with radial holes (19) which is progressively inserted axially in the hub and simultaneously made to rotate on itself;
- removing the wheel rim from the cleaning station and continuing to make the brushes (11,33) rotate and feeding compressed air to the first nozzle (14) for a second predefined time to clean the brushes; wherein said first nozzle (14) is made of a synthetic plastic material, the method also comprises the steps of:
- simultaneously to the stationary phases of the wheel rim on the cleaning station and cleaning of the brushes, sucking from the casing (6) and from the inside of the cleaning station (5) a volume of air greater than that of the compressed air fed to the nozzle (14) so as to maintain the inside of the casing (6) under vacuum to prevent dispersions of residues of powder paint through the mouth of the casing; and wherein
- the brushes (11,33) are made to rotate at a speed of at least 60 rpm; the first and the second predefined times being equal to, or lower than, 1.5 sec.; and wherein during the step of cleaning the brushes, the bristles (12,35) of the latter are intercepted by respective second nozzles (44) which feed air under pressure radially from the outside to the inside after suspending the supply of compressed air to the first nozzle (14) and for a third predefined time equal to, or lower than, 2 sec.; the wheel rims being made to station on the cleaning station and being moved by means of robots (8) having at least three numeric control axes.

## Patentansprüche

1. Reinigungsvorrichtung (1) zum Reinigen von ausgewählten Flächen von Fahrzeugrädern, wie einer Nabe (3) und einer ringförmigen Montagefläche (4) von Radfelgen (2), von Resten von Pulverlack, wobei die Reinigungsvorrichtung mindestens eine Reinigungsstation (5) umfasst, auf der ein Rad oder eine Radfelge bei Verwendung veranlasst wird zu stehen; wobei die Reinigungsstation (5) in Kombination Folgendes umfasst:
i) eine erste Hohlwelle (9), die von einem ersten zylindrischen Rohrleitungsabschnitt definiert ist;
ii) einen feststehenden Träger (10) für die erste Welle, wobei die erste Welle leer laufend auf dem feststehenden Träger montiert ist;
iii) eine erste ringförmige Bürste (11), die mit Borsten (12) versehen ist, die aus einem künstlichen und bevorzugt feuerbeständigen Kunststoffmaterial hergestellt sind, die winkelig integral mit der ersten Welle befestigt sind;
iv) eine zylindrische Luftzuführrohrleitung (13) zum Zuführen von Pressluft, die feststehend relativ zu dem Träger montiert und koaxial innerhalb der ersten Welle untergebracht ist;
v) eine schalenförmige Düse (14), die an einem oberen Ende (15) der Pressluftzuführrohrleitung leer laufend getragen wird, wobei die Düse (14) eine zylindrische Seitenwand (16), koaxial zu der Pressluftzuführrohrleitung, und eine Bodenwand (18), der Pressluftzuführrohrleitung entgegengesetzt, umfasst, und durch die zylindrische Seitenwand davon mit einer Vielzahl ringförmiger Reihen (21) erster Durchgangslöcher (19) versehen ist, wobei die ringförmigen Reihen einander in der axialen Richtung überlagert sind; und
vi) eine Drehvorrichtung (20) für die erste Welle;
vii) wobei die Düse (14) und/oder die erste Welle (9) dazu konfiguriert ist, relativ axial zwischen einer ersten Position, in der die Düse innerhalb der ersten Bürste (11) derart eingefahren ist, dass nur eine erste Reihe (21) der ersten Löcher (19) unmittelbar angrenzend an die Bodenwand unmittelbar über den Borsten (12) der ersten Bürste eingerichtet ist, und einer zweiten Position, in der die Düse (14) aus der ersten Bürste in einem Ausmaß derart herausgezogen ist, dass sie in Verwendung innerhalb der Radnabe (3) eingefügt ist, bewegbar zu sein, während die erste Bürste (11) mit der Montagefläche (4) der Nabe zusammenwirkt, und mindestens eine Reihe der ersten Löcher (19) im Wesentlichen bündig mit den Borsten (12) der ersten Bürste ausgerichtet ist; **dadurch gekennzeichnet, dass**
viii) die Innenseite der ersten Welle (9) durch den Träger (10) mit einer Luftsaugvorrichtung (22) verbunden ist, wobei zweite Löcher (23) radial in Richtung der Innenseite der ersten Bürste eingerichtet sind, um einen ringförmigen Spalt (24) zwischen der ersten Bürste und der Düse mit der Innenseite der ersten Welle zu verbinden;
ix) wobei die Reinigungsstation (5) eine zweite Hohlwelle (32) umfasst, die von einem zweiten zylindrischen Rohrleitungsabschnitt definiert und koaxial innerhalb der ersten Welle (9) zwischen der Letzteren und der Pressluftzuführrohrleitung (13) radial von beiden beabstandet eingerichtet ist; wobei die zweite Welle eine zweite ringförmige Bürste (33) trägt, die mit Borsten (35) versehen ist, die aus einem künstlichen und bevorzugt feuerbeständigen Material hergestellt und konzentrisch zu der ersten Bürste (11), radial innerhalb Letzterer und außerhalb der Düse (14) eingerichtet ist; wobei die zweite Welle axial und winkelig gehalten mit der ersten Welle integral ist, und die zweite Bürste (33) im Wesentlichen bündig mit der ersten Bürste eingerichtet und dazu konfiguriert ist, in Verwendung mindestens einen Teil einer inneren seitlichen Oberfläche (36) der Radnabe (3) zu bürsten; wobei die Düse (14) dazu konfiguriert ist, in Verwendung radial an der Innenseite der zweiten Bürste (33) und innerhalb der Radnabe (3) eingefügt zu sein, um Pressluft durch die ersten Bohrungen (19) in Richtung der inneren seitlichen Oberfläche (36) der Radnabe und durch jeweilige Borsten (11, 35) der ersten und der zweiten Bürste zu senden.

2. Reinigungsvorrichtung nach Anspruch 1, **dadurch gekennzeichnet, dass** die ersten Löcher (19) alle in derselben geneigten Richtung relativ zu einer radialen Richtung senkrecht zu der zylindrischen Seitenwand (16) der Düse derart ausgerichtet sind, dass Pressluft, die zu der Düse von der Zuführrohrleitung (13) zugeführt wird, die Düse veranlasst, relativ zu der Zuführrohrleitung zu drehen.

3. Reinigungsvorrichtung nach Anspruch 1 oder 2, **dadurch gekennzeichnet, dass** die Düse (14) aus einem künstlichen und bevorzugt feuerfesten Kunststoffmaterial hergestellt ist und ein erstes ringförmiges Element (28) umfasst, das bewegbar und koaxial an das obere Ende der PressluftZuführrohrleitung (13) gepasst ist, und ein zweites ringförmiges Element (29), das von der zylindrischen Seitenwand (16) abgegrenzt ist, das leer laufend auf einem zylindrischen Abschnitt (30) mit kleinerem Durchmesser des ersten ringförmigen Elements gepasst ist, bevorzugt unter Einfügung eines Kugellagers (31), das bevorzugt aus Glas hergestellt ist.

4. Reinigungsvorrichtung nach Anspruch 3, **dadurch gekennzeichnet, dass** das erste ringförmige Element (28) der Düse (14) dazu konfiguriert ist, einen Aufwärtsschub von der Pressluft zu empfangen, die der Düse durch die Zuführrohrleitung (13) zugeführt wird, um die Düse allmählich zu der zweiten Position zu bringen, in der sie aus der ersten Bürste (11) extrahiert wird.

5. Reinigungsvorrichtung nach einem der vorstehenden Ansprüche, **dadurch gekennzeichnet, dass** zweite Löcher (23) den ringförmigen Spalt (24) direkt mit der Innenseite der ersten Welle (9) verbinden, während der ringförmige Spalt (24) direkt mit der Innenseite der zweiten Welle (32) verbunden ist, dritte Löcher (37), die radial durch die zweite Welle durchgehend erhalten werden, die Innenseite der zweiten Welle mit der Innenseite der ersten Welle verbinden.

6. Reinigungsvorrichtung nach Anspruch 5, **dadurch gekennzeichnet, dass** der ringförmige Spalt (24) zwischen der ersten und der zweiten Bürste abgegrenzt und teilweise von einem Schutzring (38) abgedeckt ist, der dazu konfiguriert ist, bei Verwendung gegen einen Teil der ringförmigen Montagefläche anzuschlagen, um jede radiale Auswärtsbewegungen von Pulverlack, der von der Innenseite der Nabe entfernt wird, zu verhindern.

7. Reinigungsvorrichtung nach einem der vorstehenden Ansprüche, **dadurch gekennzeichnet, dass** die Drehvorrichtung (20) für die erste Welle eine Achse (39) umfasst, die radial an der Außenseite des Trägers (10) und parallel zu der ersten Welle (9), mit der sie mittels eines Radgetriebes (40) gekoppelt ist, eingerichtet ist; wobei die Reinigungsvorrichtung (1) eine Vielzahl von Reinigungsstationen (5) umfasst, die Seite an Seite in Reihen eingerichtet und dazu konfiguriert sind, gleichzeitig zu arbeiten, wobei jede von der Achse (39) gedreht wird; wobei die Achsen angetrieben sind, die erste direkt von einem Motor (41), und die anderen von der ersten Achse mittels einer Riemenübertragung (42); wobei die Achsen und der Motor gemeinsam mit und an der Außenseite von dem Träger (10) jeder Reinigungsstation innerhalb eines schalenförmigen Gehäuses (6) untergebracht sind, wobei das Gehäuse eine Öffnung (7) aufweist, die den Bürsten (11) der Reinigungsstationen zugewandt ist; wobei eine Bodenwand (26) des Gehäuses trichterförmig ist und mit jeweiligen Saugrohrleitungen (260) der Luftsaugvorrichtung (22), die von dem Gehäuse (6) außerhalb dieses getragen wird, verbunden ist.

8. Reinigungsverfahren zum Reinigen ausgewählter Flächen von Fahrzeugrädern, wie einer Nabe (3) und einer ringförmigen Montagefläche (4) von Radfelgen (2) von Resten von Pulverlack, der nach Pulverlackieren der Radfelgen verbleibt, wobei das Verfahren die folgenden Schritte umfasst:
- Veranlassen, dass jede Radfelge (2) für eine vorbestimmte erste Zeit an einer Reinigungsstation (5) stationär ist, die innerhalb eines schalenförmigen Gehäuses (6) eingeschlossen ist, die an der Oberseite mit einer Öffnung (7) versehen ist, um das Positionieren der Radfelgen an der Reinigungsstation zu erlauben;
- während der stationären Phase an der Reinigungsstation, Einführen der ringförmigen Montagefläche (4) und mindestens eines Teils einer inneren seitlichen Oberfläche (36) der Radnabe mit einem Paar drehender ringförmiger Bürsten (11, 33), die Borsten (12, 35) aufweisen, die aus einem künstlichen, bevorzugt feuerfesten Kunststoffmaterial hergestellt sind, und gleichzeitig Senden, radial von der Innenseite in Richtung der Außenseite, von Pressluft gegen die Borsten und gegen die gesamte innere seitliche Oberfläche der Nabe mittels einer ersten Düse (14), und mit radialen Löchern (19) versehen, die allmählich axial in die Nabe eingeführt wird und gleichzeitig zum Drehen um sich selbst veranlasst wird;
- Entfernen der Radfelge von der Reinigungsstation und Fortsetzen des Drehens der Bürsten (11, 33) und des Zuführens von Pressluft zu der ersten Düse (14) für eine vordefinierte zweite Zeit, um die Bürsten zu reinigen; wobei
die erste Düse (14) aus einem künstlichen Kunststoffmaterial hergestellt ist, wobei das Verfahren auch folgende Schritte umfasst:
- gleichzeitig mit den stationären Phasen der Radnabe an der Reinigungsstation und mit dem Reinigen der Bürsten, Ansaugen aus dem Gehäuse (6) und aus der Innenseite der Reinigungsstation (5) eines Luftvolumens, das größer ist als das der Pressluft, die zu der Düse (14) zugeführt wird, um die Innenseite des Gehäuses (6) unter Vakuum zu halten, um Zerstreuungen von Resten des Pulverlacks durch die Öffnung des Gehäuses zu verhindern; und wobei
- die Bürsten (11, 33) veranlasst werden, mit einer Drehzahl von mindestens 60 U/Min. zu drehen; wobei die erste und die zweite vordefinierte Zeit gleich oder geringer sind als 1,5 s; und wobei während des Reinigungsschritts der Bürsten die Borsten (12, 35) dieser Letzteren von jeweiligen zweiten Düsen (44) abgefangen werden, die Luft unter Druck radial von der Außenseite zu der Innenseite zu führen, nachdem die Zufuhr von Pressluft zu der ersten Düse (14) und für eine dritte vordefinierte Zeit gleich oder geringer als 2 s unterbrochen wird; wobei die Radfelgen veranlasst werden, an der Reinigungsstation zu stehen und mittels Robotern (8), die mindestens drei numerische Steuerachsen aufweisen, bewegt werden.

## Revendications

1. Dispositif de nettoyage (1) permettant de nettoyer des résidus de peinture en poudre de zones spécifiques de roues de véhicules telles qu'un moyeu (3) et une face de montage annulaire (4) de jantes (2), le dispositif de nettoyage comprenant au moins une station de nettoyage (5) à laquelle une roue ou une jante peut être amenée à la station en cours d'utilisation ; ; dans lequel la station de nettoyage (5) comprend, en combinaison :
i)- un premier arbre creux (9) défini par une première section de tuyau cylindrique ;
ii)- un support fixe (10) destiné au premier arbre, le premier arbre étant monté libre sur ledit support fixe ;
iii)- une première brosse annulaire (11) munie de poils (12) en matière synthétique et de préférence en matière plastique ignifugée, fixée de manière angulaire et solidaire avec le premier arbre ;
iv)- un tuyau cylindrique (13) d'alimentation en air comprimé, monté dans une position fixe par rapport au support et logé coaxialement à l'intérieur du premier arbre ;
v)- une buse (14) en forme de coupelle, portée libre par une extrémité supérieure (15) du tuyau d'alimentation en air comprimé, la buse (14) comprenant une paroi latérale cylindrique (16) coaxiale avec le tuyau d'alimentation en air comprimé et une paroi inférieure (18), opposée au tuyau d'alimentation en air comprimé, et étant dotée à travers sa paroi latérale cylindrique d'une pluralité de rangées annulaires (21) de premiers trous traversants (19), les rangées annulaires étant superposées les unes aux autres dans une direction axiale ; et
vi)- un dispositif de rotation (20) destiné au premier arbre ;
vii)- ladite buse (14) et/ou ledit premier arbre (9) étant configurés de façon à être relativement mobiles axialement entre une première position, dans laquelle la buse est rétractée à l'intérieur de la première brosse (11) de sorte que seule une première rangée (21) de premiers trous (19), immédiatement adjacents à la paroi inférieure, est disposée immédiatement au-dessus des poils (12) de la première brosse, et une seconde position, dans laquelle la buse (14) est extraite de la première brosse jusqu'à une distance telle qu'elle peut être insérée en cours d'utilisation à l'intérieur du moyeu de roue (3) tandis que la première brosse (11) coopère avec la face de montage (4) du moyeu et au moins une rangée des premiers trous (19) est alignée sensiblement au même niveau que les poils (12) de la première brosse ;
**caractérisé en ce que**
viii)- l'intérieur du premier arbre (9) est relié par l'intermédiaire du support (10) à un dispositif d'aspiration d'air (22), les seconds trous (23) étant disposés radialement vers l'intérieur de la première brosse afin de relier un espace annulaire (24) entre la première brosse et la buse avec l'intérieur du premier arbre ;
ix)- la station de nettoyage (5) comprend un deuxième arbre creux (32) défini par une deuxième section de tuyau cylindrique et disposé coaxialement à l'intérieur du premier arbre (9), entre ce dernier et le tuyau d'alimentation en air comprimé (13), à distance radiale des deux ; le deuxième arbre supportant une deuxième brosse annulaire (33) munie de poils (35) en matière synthétique et de préférence ignifuge et disposée concentriquement à la première brosse (11), radialement à l'intérieur de cette dernière et à l'extérieur de la buse (14) ; le deuxième arbre étant solidaire du premier arbre de manière contrainte axialement et angulairement et la deuxième brosse (33) étant disposée sensiblement au même niveau que la première brosse et étant configurée pour brosser en cours d'utilisation au moins une partie d'une surface latérale interne (36) du moyeu de roue (3) ; ladite buse (14) étant configurée pour être insérée en cours d'utilisation radialement à l'intérieur de la seconde brosse (33) et à l'intérieur du moyeu de roue (3) afin d'envoyer de l'air comprimé à travers lesdits premiers trous (19) vers la surface latérale interne (36) du moyeu de roue et à travers les poils respectifs (11, 35) desdites premières et seconde brosses.

2. Dispositif de nettoyage selon la revendication 1, **caractérisé en ce que** lesdits premiers trous (19) sont tous orientés dans une même direction inclinée par rapport à une direction radiale perpendiculaire à la paroi latérale cylindrique (16) de la buse, de sorte que l'air comprimé envoyé à la buse par ledit tuyau d'alimentation (13) entraîne la rotation de la buse par rapport au tuyau d'alimentation.

3. Dispositif de nettoyage selon la revendication 1 ou 2, **caractérisé en ce que** la buse (14) est faite d'une matière plastique synthétique de préférence ignifuge et comprend un premier élément annulaire (28) monté mobile et coaxial sur ladite extrémité supérieure du tuyau d'alimentation en air comprimé (13) et un second élément annulaire (29) délimité par ladite paroi latérale cylindrique (16), qui est monté libre sur une partie cylindrique de plus petit diamètre (30) du premier élément annulaire, de préférence avec interposition d'un roulement (31), de préférence en verre.

4. Dispositif de nettoyage selon la revendication 3, **caractérisé en ce que** le premier élément annulaire (28) de la buse (14) est configuré pour recevoir une poussée vers le haut par l'intermédiaire de l'air comprimé alimenté à la buse à travers le tuyau d'alimentation (13), de manière à amener progressivement la buse à ladite deuxième position, dans laquelle elle est extraite de la première brosse (11).

5. Dispositif de nettoyage selon l'une quelconque des revendications précédentes, **caractérisé en ce que** les seconds trous (23) relient directement ledit espace annulaire (24) à l'intérieur du premier arbre (9) tandis que l'espace annulaire (24) est directement relié à l'intérieur du second arbre (32), les troisièmes trous (37) obtenus radialement passant à travers le second arbre reliant l'intérieur du second arbre à l'intérieur du premier arbre.

6. Dispositif de nettoyage selon la revendication 5, **caractérisé par le fait que** ledit espace annulaire (24) est délimité entre la première et la deuxième brosse et est en partie recouvert d'un anneau de protection (38) configuré pour venir en butée en cours d'utilisation contre une partie de la face de montage annulaire afin d'empêcher tout mouvement radial vers l'extérieur de la peinture en poudre retirée de l'intérieur du moyeu.

7. Dispositif de nettoyage selon l'une des revendications précédentes, **caractérisé en ce que** ledit dispositif de rotation (20) du premier arbre comprend un essieu (39) disposé radialement à l'extérieur du support (10) et parallèle au premier arbre (9), auquel il est couplé au moyen d'une transmission à engrenages (40) ; le dispositif de nettoyage (1) comprenant plusieurs stations de nettoyage (5) disposées côte à côte en série et configurées pour fonctionner simultanément, chacune d'entre elles étant entraînées par rotation par ledit essieu (39) ; les essieux étant entraînés, le premier directement par un moteur (41) et les autres par le premier essieu, au moyen de transmissions par courroies (42) ; les essieux et le moteur étant logés conjointement et à l'extérieur du support (10) de chaque station de nettoyage à l'intérieur d'un boîtier en forme de coupelle (6), le boîtier présentant une embouchure (7) orientée vers les brosses (11) des stations de nettoyage ; une paroi inférieure (26) du boitier se trouvant en forme de trémie et étant reliée à des tuyaux d'aspiration respectifs (260) du dispositif d'aspiration d'air (22), qui est supporté par le boîtier (6), à l'extérieur de celui-ci.

8. Procédé de nettoyage permettant de nettoyer des zones spécifiques de roues de véhicules telles qu'un moyeu (3) et une face de montage annulaire (4) de jantes (2) de résidus de peinture en poudre laissés après avoir appliqué de la peinture en poudre sur les jantes, le procédé comprenant les étapes suivantes :
- immobiliser chaque jante (2) pendant une première durée prédéfinie à une station de nettoyage (5) enfermée dans un boîtier en forme de coupelle (6), qui est pourvue d'une ouverture (7) sur sa partie supérieure pour permettre le positionnement des jantes sur la station de nettoyage ;
- au cours de la phase d'immobilisation sur la station de nettoyage, engager la face de montage annulaire (4) et au moins une partie d'une surface latérale interne (36) du moyeu de roue avec une paire de brosses annulaires rotatives (11, 33) dotées de poils (12, 35) en matière plastique synthétique, de préférence ignifuge, et en envoyant simultanément radialement de l'intérieur vers l'extérieur de l'air comprimé contre les poils et contre toute la surface latérale interne du moyeu au moyen d'une première buse (14) pourvue de trous radiaux (19) qui est progressivement insérée axialement dans le moyeu et simultanément mise en rotation sur elle-même ;
- retirer la jante de la station de nettoyage et continuer à faire tourner les brosses (11, 33) et alimenter la première buse (14) en air comprimé pendant une deuxième durée prédéfinie permettant de nettoyer les brosses ;
dans lequel
ladite première buse (14) est en matière plastique synthétique, le procédé comprend également les étapes suivantes :
- simultanément aux phases d'immobilisation de la jante sur la station de nettoyage et de nettoyage des brosses, aspirer du boitier (6) et de l'intérieur de la station de nettoyage (5) un volume d'air supérieur à celui de l'air comprimé alimentant la buse (14) de manière à maintenir l'intérieur du boitier (6) sous vide afin d'éviter les dispersions de résidus de peinture en poudre à travers l'embouchure du boitier ; et dans lequel
- les brosses (11, ,33) tournent à une vitesse d'au moins 60 tours/minute ; la première et la seconde durées prédéfinies étant égales à, ou inférieures à, 1,5 secondes ; et dans lequel, au cours de l'étape de nettoyage des brosses, les poils (12, 35) de ces dernières sont interceptés par des deuxièmes buses (44) respectives qui alimentent en air sous pression radialement de l'extérieur vers l'intérieur après avoir suspendu l'alimentation en air comprimé de la première buse (14) et pendant une troisième durée prédéfinie égale à, ou inférieure à, 2 secondes ; les jantes étant amenées à stationner sur la station de nettoyage et étant déplacées au moyen de robots (8) ayant au moins trois axes de commande numérique.
